Europäisches Patentamt

European Patent Office

Office européen des brevets

(11) Publication number: **0 088 107**
**B1**

(12) **EUROPEAN PATENT SPECIFICATION**

(45) Date of publication of patent specification: **05.06.85**

(21) Application number: **82902754.9**

(22) Date of filing: **09.09.82**

(86) International application number:
**PCT/SE82/00276**

(87) International publication number:
**WO 83/00853 17.03.83 Gazette 83/07**

(51) Int. Cl.⁴: **B 65 G 1/02, B 65 G 1/04,
A 47 B 45/00**

(54) Beam, for instance for a storage rack.

(30) Priority: **10.09.81 SE 8105376
04.03.82 SE 8201344
17.06.82 SE 8203777**

(43) Date of publication of application:
**14.09.83 Bulletin 83/37**

(45) Publication of the grant of the patent:
**05.06.85 Bulletin 85/23**

(84) Designated Contracting States:
**AT BE CH DE FR GB LI NL**

(56) References cited:
**SE-B- 392 027
US-A-1 366 743
US-A-3 483 998
US-A-3 797 671**

(73) Proprietor: **ELECTROLUX CONSTRUCTOR
AKTIEBOLAG
P.O.Box 122 Säterivägen 1-3
S-661 00 Säffle (SE)**

(72) Inventor: **TORSTENSSON, Anna Gunnel
Dorothea
Östra Takene 1122
S-661 00 Säffle (SE)**
Inventor: **ANDERSSON, Olof Ingvar
Vallgatan 30
S-661 00 Säffle (SE)**
Inventor: **MOGENSEN, Erling Kristen
Stationsvej 8
DK-4340 Lejre (DK)**

(74) Representative: **Hagelbäck, Evert Isidor et al
c/o AB Electrolux Patentavdelningen
S-105 45 Stockholm (SE)**

Courier Press, Leamington Spa, England.

## Description

This invention relates to a beam for instance for supporting pallets in a storage rack, the beam comprising means for fastening the beam to a post which is provided with aligned holes, the beam being of any desired shape and having ends which are upset to form a flat surface extending in the length direction of the beam and intended to abut the exterior of the post.

Conventional pallets racks usually comprise posts which are interconnected by side and back rods extending diagonally. The posts are provided with load supporting horizontal beams on which the pallets with goods are placed. It is desirable in such devices to minimize the mounting time and the number of details necessary for mounting, and thus screw joints are avoided as far as possible. Instead the supporting beams have been manufactured of profiled sheet metal and end parts with hooks which have been welded to their ends, see for example U.S. patent 3,483,998. These hooks cooperate with holes in the posts and each part is carefully shaped to transmit loads from beam to post. These devices have proved to work well but demand comparatively complicated automatic welding machines and accuracy when being manufactured.

It is known to eliminate the use of separate welded end parts in beams for storage devices and instead to make the flat end parts and the hooks out of the beam, see for instance U.S. patent 3,797,671. These beams do, however, not increase the stability of the rack since the flat part does not cooperate with the post.

In structures for shelves which do not support too heavy goods it is also known to use sheet metal beams which are provided with tongues cooperating with posts, see Swedish patent 7508687-6. Such an arrangement is, however, too weak for a pallet rack.

The purpose of the invention is to provide a beam for a pallet rack in which the fixed end parts are provided with means intended to engage with the posts. The means and the end parts are constructed to transmit the loads at the same time allowing manufacturing in a simple bending and embossing procedure.

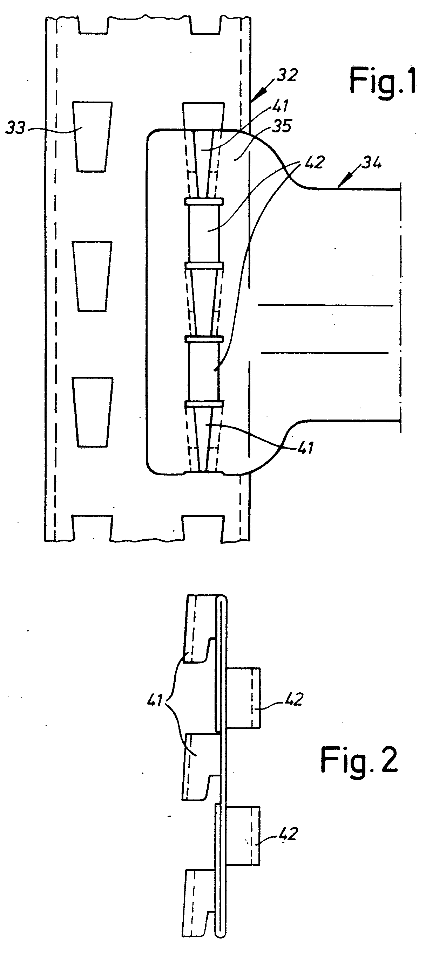

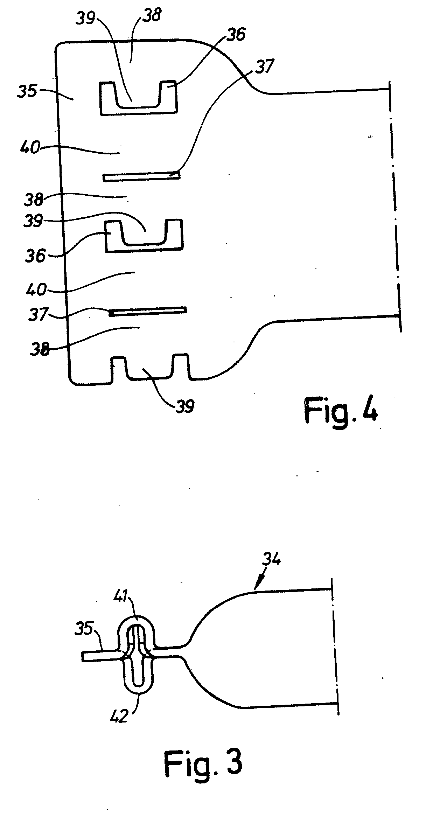

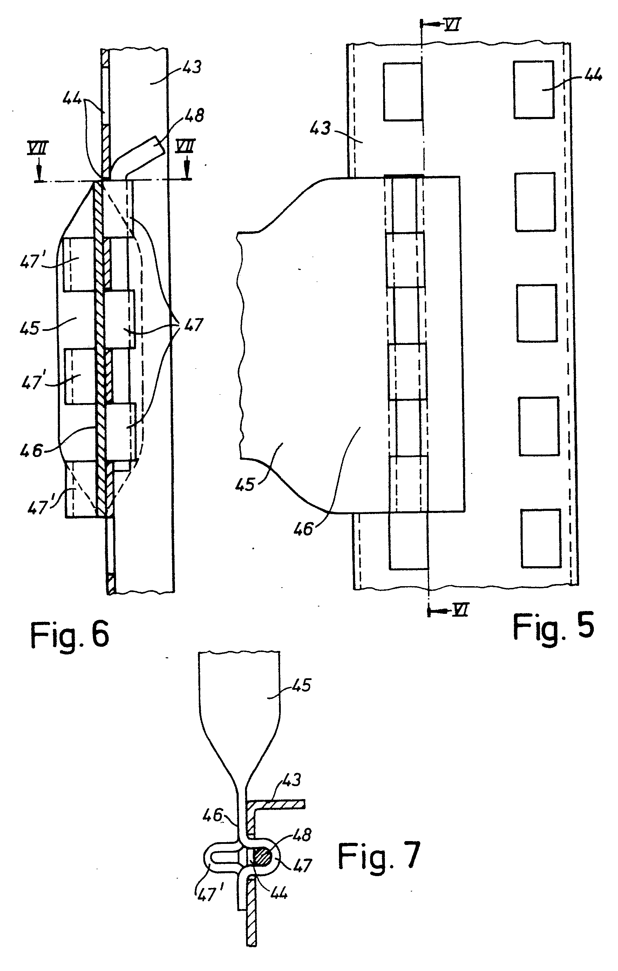

One embodiment of the invention will now be described with reference to the accompanying drawings of which Fig. 1 is a vertical projection of the outer part of a beam with associated post according to a first embodiment of the invention. Fig. 2 is an end view of the beam, Fig. 3 is a horizontal view of the end of the beam and Fig. 4 is a vertical projection of a beam not being completed. Fig. 5 is a front view of a beam and a post according to a second embodiment of the invention. Fig. 6 is a cross section on the line VI—VI in Fig. 5 and Fig. 7 is a cross section on the line VII—VII in Fig. 6.

The rack according to Figs 1—4 which is used for pallet goods comprises posts 32 of profiled sheet metal having several downwardly narrowing holes 33 which are placed one above the other. These holes support a beam 34 comprising a C-shaped profiled sheet metal which at both ends has a flat part 35 partly with double material thickness. In said part 35 (see Fig. 3) several U-shaped holes 36 and slots 37 are stamped out, thus forming zones 38 with downwardly extending tongues 39 and areas 40 there between. During a following upsetting operation several in cross section U-shaped hooks 41 are formed at one side of the flat part 35 of the beam out of the zones 38 and the tongues 39, whereas at the other side of the beam several extentions 42 are formed from the areas 40. Also these extensions 42 are U-shaped in cross section.

When mounting the beams the hooks 41 are inserted into the holes 33 in the posts and after pressing the beam downwardly it can be locked at the posts in any suitable way. This locking can be effected in a conventional way by means of pins in separate holes or by means of springloaded tongues which after positioning the hooks in the posts are inserted in the holes 33 above the hooks 41.

The rack according to Figs. 5—7 comprises posts 43 of profiled metal sheet with holes 44 which are vertically aligned. These holes support beams 45 which are also made of profiled sheet metal and which at each end have a flat part 46 which is considerably higher than the rest of the beam. In said part there are a number of aligned extensions 47, 47'. These extensions comprise in cross section U-shaped parts alternatively extending at the front and the rear side of the beam and being formed by local deformation of the flat part. The extensions 47 which are placed at the rear side of the beam are inserted into the holes 44 belonging to one of the vertical lines of holes in the posts so that the outer part of the extensions extend at the rear side of the posts. In order to lock the beam at the post a locking pin 48 is used which is inserted into the groove formed between the post and the extensions, the locking pin being bent at its upper end in order to prevent it from sliding out. This locking pin has three functions: it transmits moments and transverse forces and locks the beam against unintentional lifting movement.

The beam could have any suitable profile, for instance C-shape, U-shape or box-shape.

## Claims

1. A beam (34; 35) for instance for supporting pallets in a storage rack, the beam comprising means for fastening the beam to a post (32, 43) which is provided with aligned holes (33; 44), the beam being of any desired shape and having ends which are upset to form a flat surface (35; 46) extending in the length direction of the beam and intended to abut the exterior of the post, characterized in that the flat surface (35, 46) is provided with means (41, 42; 47, 47') which are open upwards and downwards and, seen in a plane extending in the length direction of the beam and perpendicular to said flat surface, are U-shaped and extend from both sides of said flat surface, the U-shaped means continuing into said flat surface and being formed by deformation of said flat surface.

2. A beam according to Claim 1, characterized in that the U-shaped means at one side of the beam are shaped as hooks (41) having recesses in the waist of the U-shaped means.

3. A beam according to Claim 1 or Claim 2, characterized in that the U-shaped means are placed along a vertical straight line.

4. A beam according to Claim 3, characterized in that the U-shaped means are so placed that one U-shaped means extending at one side of the beam is followed by another U-shaped means extending at the other side of the beam.

## Revendications

1. Poutrelle (34; 35), par exemple pour porter des plateaux sur un casier de stockage, du type comprenant des moyens de fixation de cette poutrelle sur un montant (32; 43) qui est muni de trous alignés (33; 44), la poutrelle présentant toute forme voulue et offrant des extrémités qui sont repoussées de manière à constituer une surface plane (35; 46) s'étendant suivant la direction longitudinale de la poutrelle et destinée à venir en butée sur l'extérieur du montant, caractérisée en ce que cette surface plane (35; 46) est munie des moyens (41, 42; 47, 47') qui sont ouverts vers le haut et vers le bas et qui, vus dans un plan s'étendant suivant la direction longitudinale de la poutrelle perpendiculaires à cette surface plane, sont en forme de U et s'étendent sur l'un et l'autre côtés de cette surface plane, ces moyens en forme de U se prolongeant suivant cette surface plane et étant formés par déformation de cette même surface plane.

2. Poutrelle suivant la revendication 1, caractérisée en ce que les moyens en forme de U situés sur un côté de la poutrelle sont conformés en crochets (41) présentant des cavités dans la partie médiane de ces moyens en forme de U.

3. Poutrelle suivant la revendication 1 ou la revendication 2, caractérisée en ce que les moyens en forme de U sont disposés le long d'une ligne verticale rectiligne.

4. Poutrelle suivant la revendication 3, caractérisée en ce que les moyens en forme de U sont disposés de manière que l'un de ces moyens s'étendant sur un côté de la poutrelle soit suivi par un autre moyen s'étendant de sont autre côté.

## Patentansprüche

1. Träger (34, 35), beispielsweise zum Abstützen von Paletten in einem Lagerregal, welcher Träger Mittel zum Befestigen des Trägers an einem Ständer (32, 43) aufweist, welcher mit ausgerichteten Löchern (33, 44) versehen ist, wobei der Träger eine beliebige gewünschte Form und Enden hat, die unter Bildung einer sich in der Längsrichtung des Trägers erstreckenden ebenen Fläche (35, 46), die an der Außenseite des Ständers anliegen soll, gestaucht sind, dadurch gekennzeichnet, daß die ebene Fläche (35, 46) mit Elementen (41, 42, 47, 47') versehen ist, die nach oben und unten offen sind und, gesehen in einer Ebene, die sich in Längsrichtung des Trägers und senkrecht zur erwähnten ebenen Fläche erstreckt, U-förmig sind und sich zu beiden Seiten der ebenen Fläche erstrecken, wobei sich die U-förmigen Elemente in der ebenen Fläche fortsetzten und durch Deformation dieser ebenen Fläche gebildet sind.

2. Träger nach Anspruch 1, dadurch gekennzeichnet, daß die U-förmigen Elemente an einer Seite des Trägers als Haken (41) mit Ausnehmungen in Mittelteil des U-förmigen Elements ausgebildet sind.

3. Träger nach Anspruch 1 oder Anspruch 2, dadurch gekennzeichnet, daß die U-förmigen Elemente entlang einer vertikalen geraden Linie angeordnet sind.

4. Träger nach Anspruch 3, dadurch gekennzeichnet, daß die U-förmigen Elemente so angeordnet sind, daß einem sich an einer Seite des Trägers erstreckenden U-förmigen Element ein anderes sich auf die andere Seite des Trägers erstreckendes U-förmiges Element folgt.

Fig.1

Fig. 2

Fig. 4

Fig. 3

Fig. 6

Fig. 5

Fig. 7

3